(19) Europäisches Patentamt
European Patent Office
Office européen des brevets

(11) Publication number: **0 095 128**
**B1**

(12) **EUROPEAN PATENT SPECIFICATION**

(45) Date of publication of patent specification: **27.08.86**

(51) Int. Cl.$^4$: **C 04 B 41/87**, C 04 B 35/58, B 23 B 27/14

(21) Application number: **83104853.3**

(22) Date of filing: **17.05.83**

(54) **Coated composite silicon nitride cutting tools.**

(30) Priority: **20.05.82 US 380362**
**20.05.82 US 380379**
**20.05.82 US 380382**
**20.05.82 US 380380**

(43) Date of publication of application:
**30.11.83 Bulletin 83/48**

(45) Publication of the grant of the patent:
**27.08.86 Bulletin 86/35**

(84) Designated Contracting States:
**BE DE FR GB SE**

(58) References cited:
**EP-A-0 035 777**
**EP-A-0 043 583**
**DE-A-2 600 631**
**FR-A-2 243 754**
**GB-A-2 048 960**

**CHEMICAL ABSTRACTS, vol. 95, no. 8, August 1981, page 292, no. 66690t, Columbus, Ohio, USA**

(73) Proprietor: **GTE Laboratories Incorporated**
**100 W. 10th Street**
**Wilmington Delaware (US)**

(72) Inventor: **Sarin, Vinod K.**
**7 Diamond Road**
**Lexington, MA 02173 (US)**
Inventor: **Buljan, Sergej-Tomislav**
**23 Washington Drive**
**Acton, MA 01720 (US)**
Inventor: **D'Angelo, Charles**
**12 Maplecrest Drive**
**Southboro, MA 01772 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

(56) References cited:
**CHEMICAL ABSTRACTS, vol. 94, no. 2, January 1981, page 203, no. 7024k, Columbus, Ohio, USA**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:
**TECHNISCHE MITTEILUNGEN KRUPP, vol. 39, no. 1, May 1981, pages 13-22, Essen, DE. U. KÖNIG et al.: "Stand und Perspektive bei der chemischen und physikalischen Abscheidung von Hartstoffen auf Hartmetallen"**

**Description**

The present invention relates to a composite ceramic cutting tool of the type as indicated in the precharacterizing clause of claim 1. A cutting tool of this type is already known from EP—A—35 777.

From Chemical Abstracts 94, page 203, No. 7024k there are known ceramic throw-away cutting tips predominantly comprising silicon nitride and further comprising small amounts of magnesium oxide, yttrium oxide, tantalum oxide, zirconium oxide and/or alumina a sintering aid. Substrates of the above composition after hot-pressing are coated with alumina and/or AlON.

From FR—A—2 243 754 there are known ceramic cutting tools comprising at least one refractory oxide mixed with one or more hard carbides or nitrides which in addition show a thin surface layer of a refractory oxide. The surface layer consists of an oxide selected from Al, Zr, Si, Ca, Mg, Ti and/or Hf, or a mixture of at least two of these oxides.

From technische Mitteilungen Krupp, Volume 39, No. 1, pages 13 to 22, there is known that layers made of titanium carbide, titanium nitride as well as titanium carbonitride result in an improved wear resistance under demanding conditions of machining speed, temperature, or workpiece hardness.

It is therefore known in the art that the wear resistance of cutting tools may be enhanced by the application of thin coatings of a highly wear resistant material such as titanium carbide or aluminum oxide. These coated materials are finding increasing commercial utility for certain cutting tool and machining applications.

Economic pressures for higher productivity in machining applications are placing increasing demands upon the performance of cutting tool materials. To achieve high productivity in machining, a tool must be able to cut at high speeds. At cutting speeds exceeding 1500 surface feet per minute (sfpm), the high temperature strength and chemical inertness of a cutting tool material become more and more important. The usefulness of cemented carbide cutting tool materials (the predominant material used in cutting tools today) has been extended to applications requiring cutting speeds of about 1500 sfpm by coating such tools with aluminum oxide. For cutting speeds in excess of 1500 sfpm, cemented carbide tools encounter problems associated with loss of strength and tool nose deformation, which affect dimensional tolerance in the workpiece and contribute to shorter tool life.

Conventional ceramic cutting tools overcome many of these disadvantages but have some limitations relating to their lower impact strength and fracture toughness. This is especially true of many alumina-based conventional ceramic cutting tools. Silicon nitride-based ceramic cutting tools have significantly higher impact strength and fracture toughness, but can exhibit lower than desired chemical inertness when employed in cutting long-chipping metals such as steel.

It is therefore the object of the present invention to provide improved cutting tools and in particular to provide a specific combination of tool substrate and tool surface coating resulting in an improved wear resistance over prior art combinations.

The above object of the present invention is achieved by the invention as claimed in claim 1 and in particular by using a TiC containing composite silicon nitride substrate body as defined in claim 1 in combination with a surface coating layer consisting essentially of TiC or TiCN.

Preferred embodiments of the present invention are defined in the subclaims.

The sole drawing figure is a graph illustrating the resistance to wear of materials in accordance with the present invention compared with prior art materials employed in the machining of steel.

For a better understanding of the present invention together with other and further objects, advantages and capabilities thereof, reference is made to the following disclosure and appended claims in connection with the above-described drawing figure.

Cutting tools and tool inserts according to the present invention comprise a composite silicon nitride substrate comprising finely divided particles of a hard refractory material uniformly distributed in a densified silicon nitride matrix. By the term hard refractory material, as used throughout this specification and the appended claims, is meant any carbide and/or nitride and/or carbonitride of a refractory metal, including mixtures and solid solutions thereof. Particular hard refractory materials contemplated as falling within the scope of this invention are materials selected from the foregoing which have a microhardness greater than about 1000 kg/mm$^2$ and a fusion or decomposition temperature greater than about 1500°C. Typical hard refractory materials are the carbides and/or nitrides and/or carbonitrides of titanium, vanadium, chromium, zirconium, niobium, molybedenum, hafnium, tantalum and tungsten, including combinations and solid solutions thereof. The most preferred hard refractory particulates are titanium carbide, titanium nitride, titanium carbonitride, hafnium carbide and hafnium nitride. The particles of the hard refractory material are uniformly distributed in a matrix consisting essentially of a first phase of silicon nitride and a refractory second phase comprising silicon nitride and an effective amount of a densification aid selected from the group consisting of magnesium oxide, yttrium oxide, zirconium oxide, hafnium oxide, the lanthanide rare earth oxides, and mixtures thereof.

The average particle size of the hard refractory particulate preferably ranges between about 0.5 micron to about 20 microns, more preferably from about 0.5 microns to about 5 microns.

The useful life and performance of cutting tools and tool inserts in accordance with this invention

depend to a large measure on the volume fraction taken up by the particulate hard refractory material of the total composite. It has been found that the hardness of the cutting tool substrate body generally increases with increasing volume percent content of the particulate hard refractory material up to about 60 volume percent, but in order to obtain highest hardness and fracture toughness, it is preferred that the carbide and/or nitride and/or carbonitride particulate contained in the substrate body ranges between about 15 to about 50 volume percent, most preferably from about 20 to about 40 volume percent.

The substrate body of coated composite silicon nitride cutting tools and tool inserts in accordance with this invention possesses a composite microstructure in which the hard refractory particulate is distributed throughout a host matrix. The matrix consists essentially of a first phase of silicon nitride and a refractory second phase comprising silicon nitride and an effective amount of a densification aid selected from the group consisting of magnesium oxide, yttrium oxide, hafnium oxide, the lanthanide rare earth oxides, and mixtures thereof.

Because the intergranular phase is essentially continuous, and because impurities and additives present in the overall composite substrate body tend to concentrate in the intergranular phase during the densifying process, the composition of the intergranular phase profoundly affects the high temperature properties of the densified composite.

It is considered important to incorporate into this intergranular phase of the host matrix a densification aid which permits densification to densities approaching theoretical, and at the same time does not deleteriously affect the high temperature strength and creep resistance of the overall composite. Typical densification aids useful for this purpose are metal oxides selected from magnesium oxide, yttrium oxide, zirconium oxide, hafnium oxide, the lanthanide rare earth oxides, and mixtures thereof. Yttrium oxide and hafnium oxide are preferred. The metal oxide densification aid is employed in amounts from a lower effective amount which permits full densification to an upper amount which does not unduly affect the high temperature properties of the body. Preferably the metal oxide densification aid comprises from about 1 weight percent to about 25 weight percent of the two phase host matrix in which the hard refractory particulate is dispersed. More preferably, the metal oxide comprises from about 1 weight percent to about 5 weight percent of the host matrix.

Silicon dioxide is added to the initial powder mixture employed in the formation of the substrate body or alternatively, is present as a surface oxide coating on the silicon nitride employed. During the subsequent processing of the powder mixture to form the densified composite silicon nitride substrate body, the silicon dioxide and metal oxide densification aid tend to concentrate in the intergranular phase. It is preferred that the amount of silicon dioxide present in the final densified body comprise less than about 5 weight percent of the host matrix.

The intergranular phase of the substrate host matrix may contain further additional materials in the form of additives or impurities in addition to the above-mentioned silicon dioxide and metal oxide densification aids. Such further additional materials are preferably present in amounts less than about 5 weight percent of the host matrix.

In accordance with the principles of the present invention, the substrate body is coated with at least one hard, adherent coating layer consisting essentially of TiC or TiCN.

The coating layer is of a thickness ranging between about 0.1 microns to about 20 microns, preferably between about 1.0 and about 10 microns. Exemplary methods of making coated cutting tools and tool inserts in accordance with this invention are given below. The methods are to be viewed as illustrative and are not to be viewed as limiting the scope of the invention as defined by the appended claims. Methods I and II below illustrate methods of preparing the substrate body of cutting tools and tool inserts of this invention. In one method, pressed green compacts containing silicon nitride, a hard particulate refractory material, silicon dioxide, and one or more metal oxides serving as densification aids are sintered to a dense body. In the other method, dry powder mixtures of the above materials are hot pressed to produce a shaped cutting tool insert.

Method I

To one part by weight of a powder mixture of silicon nitride, a hard refractory material, and metal oxide densification aid are added about 2.5 parts by weight of toluene, 0.1 parts by weight of methanol, and about 0.05 parts by weight of stearic acid. The resulting slurry is thoroughly mixed by ball milling and then dried at 75°C. The resulting dry mixture is ball milled for about 24 hours and then mixed with about 0.05 parts by weight of a copolymer of polyethylene glycol and methoxypolyethylene glycol, 1 part by weight toluene, and about 0.05 parts by weight methanol. This mixture is mixed by ball milling for about 15 minutes, dried at 75°C and then screened through a 60 mesh screen*. The −60 mesh fraction is pressed at ambient temperatures at a pressure of about 25,000 psig (172.4 MPa) to obtain a green compact. The residual solvents and stearic acid binder are removed from the green compact by heating at about 600°C in an inert atmosphere. The green compact is then sintered to a hard, highly densified composite body by heating at a temperature of between about 1700°C to about 1850°C.

Method II

The procedure of Method I is followed to the point of obtaining the −60 mesh* dry powder

* U. S. Sieve Series

mixture. This material is then pressed at a pressure of about 3000 psig (20.68 MPa) and a temperature of about 1700°C to produce a hard, highly densified composite body.

Coating methods

The composite substrate body produced by either Method I or Method II is coated with a refractory material by chemical vapor deposition techniques or physical vapor deposition techniques known in the art. The coatings are applied by chemical vapor deposition or by physical vapor deposition techniques such as direct evaporation, sputtering, etc.

Useful characteristics of the chemical vapor deposition method are the purity of the deposited layer and the tendency for some interaction between the layer being deposited and the substrate during early stages of the deposition process which leads to good layer adherency.

The following examples provide particulars for the preparation of titanium carbide coated composite silicon nitride substrate cutting tool inserts in accordance with the present invention. In these examples, the composite substrate contain particulate titanium carbide uniformly distributed in the substrate matrix.

Example 1

Titanium carbide-containing composite silicon nitride substrate bodies were coated with titanium carbide at atmospheric pressure. A gaseous mixture of 1% $TiCl_4$, 2% $CH_4$, and 97% $H_2$ was passed over the substrate bodies at a flow rate of about 20 liters/minute in a chamber held at a temperature of about 1100°C for a period of about 2 hours. The resulting coated substrate bodies had a uniform adherent coating of titanium carbide approximately 6 microns in thickness.

Example 2

Titanium carbide-containing composite silicon nitride substrate bodies were coated with titanium carbide at a pressure of about 50 Torr (46.65 mbar). A gaseous mixture of 1% $TiCl_4$, 1% $CH_4$, and 98% $H_2$ was passed over the substrate bodies at a flow rate of about 10 liters/minute in a chamber held at about 1100°C for a period of about 6 hours. The resulting coated substrate bodies had a uniform adherent coating of titanium carbide approximately 6 microns in thickness.

As another example, the composite substrate body produced by either Method I or Method II is coated with a refractory metal carbonitride. For example, the preferred coating of titanium carbonitride is applied by chemical vapor deposition. Alternatively, the refractory metal is deposited by chemical or physical vapor deposition techniques after which the metal layer is nitrided and carburized.

As an example, titanium carbonitride layers are formed on the composite silicon nitride substrates of cutting tools of this invention in the chemical vapor deposition technique by passing a gaseous mixture of titanium tetrachloride, a gaseous carbon source such as methane, a gaseous nitrogen source such as nitrogen or ammonia, and hydrogen over the substrate at a temperature of between about 800°C and 1500°C, preferably at temperatures above about 1200°C. Dissociated ammonia may be substituted for a mixture of nitrogen and hydrogen gases. The reaction is described by the following equation, although hydrogen is often added to insure that the reaction takes place in a reducing environment:

$$TiCl_4+CH_4+N_2=Ti(C_xN_y)+4HCl$$

The mixture is passed over the heated substrate until the desired coating thickness is achieved. Routine experimentation is used to determine the rate of coating thickness growth at a particular gaseous flow rate and temperature.

Control of the amounts of methane and nitrogen in the gas mixture permit the formation of layers in which the ratio of x to y in the formula $Ti(C_xN_y)$ are varied. The values of x and y preferably range between about 0.5 to about 0.6 for x and from about 0.4 to about 0.5 for y resulting in a preferred range of x/y ratio of from about 1.0 to about 1.5. The most preferred ratio of x to y is about 1.22, corresponding to values for x and y of about 0.55 and about 0.45, respectively.

The following examples provides details for the preparation of titanium carbonitride coated composite silicon nitride substrate cutting tool inserts in accordance with the present invention. In these particular example, the composite substrate contains particulate titanium carbide uniformly distributed in the substrate matrix.

Example 3

Several composite silicon nitride substrate bodies containing about 30 volume percent titanium carbide were placed in a reactor and heated to a temperature of about 1060°C. A gaseous mixture of about 1% $TiCl_4$, 3.5% $CH_4$, 2.5% $N_2$, and 93% $H_2$ was passed over the bodies at atmospheric pressure and at a flow rate of about 20 liters/minute for a period of about 2 hours. At the end of this time, the titanium carbonitride coated bodies were removed from the reactor, and the coating thickness was determined to be about 8 microns by scanning electron microscopic techniques. An analysis of the composition of the coating indicated that it had a C/N ratio of about 1.1.

Example 4

Several composite silicon nitride substrate bodies containing about 30 volume percent titanium carbide were coated under essentially the same conditions as in example 3, however at a pressure of about 50 Torr (46.65 mbar). The gaseous mixture composition was about 0.5% $TiCl_4$, 1.5% $CH_4$, 2% $N_2$, and 96% $H_2$. After 2 hours of coating at about 1060°C, the bodies had a

coating of less than 10 microns thickness, having a C/N ratio of about 1.1.

Referring to the sole drawing Figure, there are shown the wear resistance characteristics of the cutting tool made in accordance with the above-described example compared with the wear resistance characteristics of several other tools. The data plotted in the Figure were obtained by machining a piece of 4340 steel (Brinnell hardness number 280—300) with each tool insert material under identical conditions and measuring the rate of wear of the tool piece as indicated by a change in workpiece radius (delta R).

The machining speed was 700 surface feet per minute (21336 surface centimeters per minute), the cut was 0.050 inches (0.13 cm) deep, and the rate of cross-feed was 0.01 inches per revolution (0.0254 centimeters per revolution). The curves depict tool nose wear versus duration of cutting time. The ordinate of the graph is plotted in units of apparent change in the radius of the rotating workpiece, used as an indicator of tool nose wear. As the tool cuts across the workpiece face, the radius of the workpiece should theoretically remain at a constant value equivalent to the old radius less the depth of the cut being made. This condition corresponds to the abscissa of the graph. Positive values of delta R corresponds to wear in the cutting tool nose which results in an apparent decrease in the radius of the cut workpiece. Correspondingly, negative values of delta R represent deformation of the tool nose.

Curves B, D and E represent prior art coated cemented carbide cutting tools. Curve D corresponds to a titanium carbide coated cemented carbide tool, while curves B and E represents data for alumina coated cemented carbide tools. In all three cases, the curves dip below the abscissa, indicating tool nose deformation. As discussed above, this is due to the tendency of cemented carbide tools to soften under certain machining conditions.

Curves A, C and F represent data for the machinability of ceramic cutting tools. Curve A corresponds to the wear performance of an uncoated composite silicon nitride cutting tool containing titanium carbide uniformly distributed in a two phase silicon nitride matrix. This tool in fact corresponds to the substrate of coated tools made in accordance with the teachings of the present invention.

Curve C represents data for a prior art titanium carbide-containing composite alumina cutting tool, and curve F corresponds to a cutting tool in accordance with the present invention.

Titanium carbide and titanium carbonitride coated composite silicon nitride cutting tools of the present invention (Curve F) is superior in wear resistance to all the tools for which data is shown.

Thus, the present invention provides cutting tools comprising a composite silicon nitride substrate coated with a refractory material which have improved machinability and wear resistance to known prior art tools.

While there have been shown and described what are at present believed to be the preferred embodiments of the invention, it will be obvious to one skilled in the art that various modifications may be made therein without departing from the scope of the invention as defined by the appended claims.

**Claims**

1. A composite ceramic cutting tool comprising a composite silicon nitride substrate body consisting essentially of particles of a hard refractory material uniformly distributed in a matrix consisting essentially of a first phase of silicon nitride and a refractory second phase comprising silicon nitride and an effective amount of a densification aid selected from the metal oxide group consisting of magnesium oxide, yttrium oxide, zirconium oxide, hafnium oxide, the lanthanide rare earth oxides, and mixtures thereof; characterized in that said substrate body has at least one coating layer consisting essentially of TiC or TiCN.

2. A coated composite ceramic cutting tool in accordance with Claim 1 wherein said coating layer is of a thickness between about 0.1 and 10 microns (μm).

3. A coated composite ceramic cutting tool in accordance with claim 1 wherein said coating layer is of a thickness between about 1.0 and about 10 (μm).

4. A coated composite ceramic cutting tool in acordance with claim 1 wherein said hard refractory material is selected from the carbides, nitrides, carbonitrides and solid solutions thereof of titanium, vanadium, chromium, zirconium, niobium, molybdenum, hafnium, tantalum, and tungsten and mixtures thereof.

5. A coated composite ceramic cutting tool in accordance with claim 1 wherein said hard refractory material is selected from the group consisting of titanium carbide, titanium nitride, titanium carbonitride, hafnium carbide, hafnium nitride, and hafnium carbonitride.

6. A coated composite ceramic cutting tool in accordance with claim 1 wherein the average particle size of said hard refractory material is between about 0.5 to about 20 microns (μm).

7. A coated composite ceramic cutting tool in accordance with claim 1 wherein the average particle size of said hard refractory material is less than about 5 microns (μm).

8. A coated composite ceramic cutting tool in accordance with claim 1 wherein said hard refractory material is present in said substrate in an amount of up to about 60 volume percent.

9. A coated composite ceramic cutting tool in accordance with claim 1 wherein said hard refractory material is present in said substrate in an amount of between about 15 volume percent to about 50 volume percent.

10. A coated composite ceramic cutting tool in accordance with claim 1 wherein said hard refractory material is present in said substrate in

an amount of between about 20 volume percent and about 40 volume percent.

11. A coated composite ceramic cutting tool in accordance with claim 1 wherein silicon dioxide and said metal oxides are present in a combined amount of between 1 weight percent to 25 weight percent of said two phase matrix.

**Patentansprüche**

1. Verbund - Keramikschneidwerkzeug, umfassend einen Verbund - Siliciumnitrid - Substratkörper, welcher im wesentlichen aus Teilchen eines harten, feuerfesten Materials besteht, welche gleichmäßig in einer Matrix verteilt sind, die im wesentlichen aus einer ersten Phase aus Siliciumnitrid und einer feuerfesten zweiten Phase besteht, welche Siliciumnitrid und eine wirksame Mange eines Verdichtungshilfsmittels, gewählt aus der Metalloxidgruppe, bestehend aus Magnesiumoxid, Yttriumoxid, Zirconiumoxid, Hafniumoxid, den Lanthaniden-Seltenerdoxiden und Mischungen daraus, umfaßt, dadurch gekennzeichnet, daß der Substratkörper wenigstens eine Überzugsschicht, bestehend im wesentlichen aus TiC oder TiCN, besitzt.

2. Beschichtetes Verbund-Keramikschneidwerkzeug nach Anspruch 1, worin die Überzugsschicht eine Dicke von etwa 0,1 bis 10 Mikron (μm) besitzt.

3. Beschichtetes Verbund-Keramikschneidwerkzeug nach Anspruch 1, worin die Überzugsschicht eine Dicke von etwa 1,0 bis etwa 10 Mikron (μm) besitzt.

4. Beschichtetes Verbund-Keramikschneidwerkzeug nach Anspruch 1, worin das harte, feuerfeste Material aus den Carbiden, Nitriden, Carbonitriden und festen Lösungen daraus von Titan, Vanadium, Chrom, Zirkonium, Niob, Molybdän, Hafnium, Tantal und Wolfram und Mischungen daraus gewählt wird.

5. Beschichtetes Verbund-Keramikschiedwerkzeug nach Anspruch 1, worin das harte, feuerfeste Material aus der Gruppe, bestehend aus Titancarbid, Titannitrid, Titancarbonitrid, Hafniumcarbid Hafniumnitrid und Hafniumcarbonitrid, gewählt wird.

6. Beschichtetes Verbund-Keramikschiedwerkzeug nach Anspruch 1, worin die durchschnittliche Teilchengröße des harten, feuerfesten Materials etwa 0,5 bis etwa 20 Mikron (μm) beträgt.

7. Beschichtetes Verbund-Keramikschneidwerkzeug nach Anspruch 1, worin die durchschnittliche Teilchengröße des harten, feuerfesten Materials weniger als etwa 5 Mikron (μm) beträgt.

8. Beschichtetes Verbund-Keramikschneidwerkzeug nach Anspruch 1, worin das harte, feuerfeste Material in dem Substrat in einer Menge von bis zu etwa 60 Vol.-% vorliegt.

9. Beschichtetes Verbund-Keramikschneidwerkzeug nach Anspruch 1, worin das harte, feuerfeste Material in dem Substrat in einer Menge von etwa 15 Vol.-% bis etwa 50 Vol.-% vorliegt.

10. Beschichtetes Verbund-Keramikschneidwerkzeug nach Anspruch 1, worin das harte, feuerfeste Material in dem Substrat in einer Menge von etwa 20 Vol.-% bis etwa 40 Vol.-% vorliegt.

11. Beschichtetes Verbund-Keramikschneidwerkzeug nach Anspruch 1, worin Siliciumdioxid und die Metalloxide in einer vereinigten Menge von 1 Gew.-% bis 25 Gew.-% der Zweiphasenmatrix vorliegen.

**Revendications**

1. Outil de coupe en céramique composite comprenant un substrat en nitrure de silicium composite composé essentiellement de particules d'un matériau réfractaire dur uniformément distribuées dans une matrice composée essentiellement d'une première phase de nitrure de silicium et d'une second phase réfractaire comprenant du nitrure de silicium et d'une quantité efficace d'une aide à la densification choisie dans le groupe des oxydes de métal comprenant l'oxyde de magnésium, l'oxyde d'yttrium, l'oxyde de zirconium, l'oxyde d'hafnium, les oxydes des lanthanides, et des mélanges de ceux-ci, caractérisé en ce que le dit substrat comporte au moins une couche d'un revêtement consistant essentiellent en TiC ou TiCN.

2. Outil de coupe en céramique composite pourvu d'un revêtement selon la revendication 1 caractérisé en ce que l'épaisseur de la dite couche de revêtement est comprise entre 0,1 et 10 μm environ.

3. Outil de coupe en céramique composite pourvu d'un revêtement selon la revendication 1 caractérisé en ce que l'épaisseur de la dite couche de revêtement est comprise entre 1,0 et 10 μm environ.

4. Outil de coupe en céramique composite pourvu d'un revêtement selon la revendication 1 caractérisé en ce que le dit matériau réfractaire dur est choisi dans le groupe comprenant les carbures, les nitrures, les carbonitrures et des solutions solides de ceux-ci, de titane, de vanadium, de chrome, de zirconium, de niobium, de molybdène, d'hafnium, de tantale et de tungstène et des mélanges de ceux-ci.

5. Outil de coupe en céramique composite pourvu d'un revêtement selon la revendication 1 caractérisé en ce que le dit matériau réfractaire du est choisi dans le groupe comprenant le carbure de titane, le nitrure de titane, le carbonitrure de titane, le carbure d'hafnium, le nitrure d'hafnium, et le carbonitrure d'hafnium.

6. Outil de coupe, en céramique composite pourvu d'un revêtement selon la revendication 1 caractérisé en ke que la taille moyenne des particules du dit matériau réfractaire dur est comprise entre 0,5 et 20 μm environ.

7. Outil de coupe en céramique composite pourvu d'un revêtement selon la revendication 1 caractérisé en ce que la taille moyenne des

particules du dit matériau réfractive dur est inférieure à 5 µm environ.

8. Outil de coupe en céramique composite pourvu d'un revêtement selon la revendication 1 caractérisé en ce que le dit matériau réfractaire dur est présent dans le dit substrat en quantité allant jusqu'à 60% en volume environ.

9. Outil de coupe en céramique composite pourvu d'un revêtement selon la revendication 1 caractérisé en ce que le dit matériau réfractaire dur est présent dans le dit substrat en quantité comprise entre 15 et 50% en volume environ.

10. Outil de coupe en céramique composite pourvu d'un revêtement selon la revendication 1 caractérisé en ce que le dit matériau réfractaire dur est présent dans le dit substrat en quantité comprise entre 20 et 40% en volume environ.

11. Outil de coupe en céramique composite pourvu d'un revêtement selon la revendication 1 caractérisé en ce que le dioxyde de silicium et les dits oxydes de métal sont présents ensemble en quantité comprise entre 1 et 25% en poids de la dite matrice à deux phases.

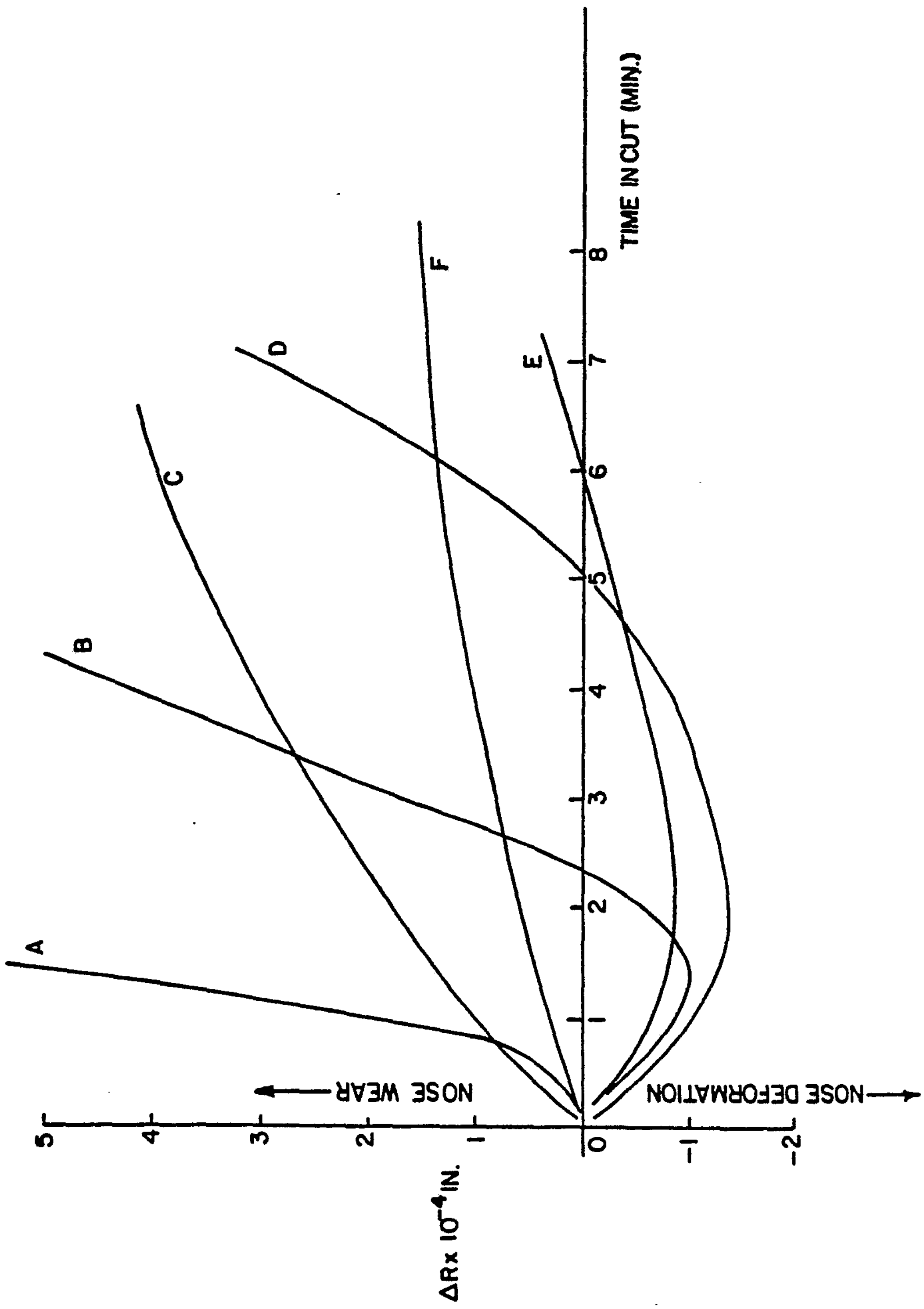

ΔR x 10⁻⁴ IN.
NOSE WEAR
NOSE DEFORMATION
TIME IN CUT (MIN.)
A
B
C
D
E
F
5
4
3
2
1
0
-1
-2
1
2
3
4
5
6
7
8